# EUROPÄISCHE PATENTANMELDUNG

(11) **EP 1 234 980 A2**
(43) Veröffentlichungstag der Anmeldung: **28.08.2002**
(21) Anmeldenummer: 02003405.4
(22) Anmeldetag: 14.02.2002
(51) Int. Cl.: F04B 49/035, B08B 3/02

(54) **Pumpeneinheit für ein Hochdruckreinigungsgerät**

(30) Priorität: 22.02.2001 DE 20103142 U
(71) Anmelder: Alfred Kärcher GmbH & Co., 71364 Winnenden (DE)
(72) Erfinder: Müller, Wolfgang, 71394 Kernen (DE); Klöpfer, Jürgen, 71576 Burgstetten (DE)
(74) Vertreter: Hoeger, Stellrecht & Partner

(57) **Zusammenfassung**

Um bei einer Pumpeneinheit (1) für ein Hochdruckreinigungsgerät mit mindestens einer mit einer Saugleitung (3) und mit einer Druckleitung (5) verbundenen Pumpkammer, einer von der Druckleitung (5) zur Saugleitung (3) zurückführenden Bypassleitung (14) und mit einem Schließventil (16) in der Bypassleitung (14), welches einen Ventilkörper (23) unter der Wirkung einer Feder (25) entgegen der Strömungsrichtung in der Bypassleitung (14) gegen einen Dichtsitz (22) in eine Schließstellung drückt, zu erreichen, daß eine stabile Öffnungslage des Schließventils (16) in der Bypassleitung (14) erreicht werden kann, wird vorgeschlagen, daß dem Dichtsitz (22) gegenüber ein Halteelement (30) aus einem flexiblen und elastisch verformbaren Material angeordnet ist, gegen welches der Ventilkörper (23) beim Abheben vom Dichtsitz (22) in einer Offenstellung derart gedrückt wird, daß der Ventilkörper (23) von dem Halteelement (30) nur durch Verformung des Halteelements (30) entgegen einer von dem Halteelement (30) erzeugten Rückhaltekraft wieder in Richtung auf den Dichtsitz (22) in die Schließstellung verschiebbar ist.

## Beschreibung

Die Erfindung betrifft eine Pumpeneinheit für ein Hochdruckreinigungsgerät mit mindestens einer mit einer Saugleitung und mit einer Druckleitung verbundenen Pumpkammer, einer von der Druckleitung zur Saugleitung zurückführenden Bypassleitung und mit einem Schließventil in der Bypassleitung, welches einen Ventilkörper unter der Wirkung einer Feder entgegen der Strömungsrichtung in der Bypassleitung gegen einen Dichtsitz in eine Schließstellung drückt.

Eine solche Pumpeneinheit für ein Hochdruckreinigungsgerät ist beispielsweise aus der DE 297 12 659 U1 bekannt.

Bei derartigen Pumpeneinheiten ergibt sich häufig das Problem, daß der Ventilkörper nach dem Öffnen rasch wieder in die Schließstellung gedrückt wird, da durch die Öffnung des Schließventils der Druck in der Druckleitung unter den Öffnungsdruck des Schließventils fällt, und dieser Vorgang kann sich unter Umständen rasch aufeinanderfolgend wiederholen, so daß ein Flattern des Schließventils in der Bypassleitung eintritt. Dies führt zu einer raschen Zerstörung dieses Ventils und ist daher nachteilig.

Es ist Aufgabe der Erfindung, eine gattungsgemäße Pumpeneinheit so auszubilden, daß eine stabile Öffnungslage des Schließventils in der Bypassleitung erreicht werden kann.

Diese Aufgabe wird bei einer Pumpeneinheit der eingangs beschriebenen Art erfindungsgemäß dadurch gelöst, daß dem Dichtsitz gegenüber ein Halteelement aus einem flexiblen und elastisch verformbaren Material angeordnet ist, gegen welches der Ventilkörper beim Abheben vom Dichtsitz in einer Offenstellung derart gedrückt wird, daß der Ventilkörper von dem Halteelement nur durch Verformung des Halteelements entgegen einer von dem Halteelement erzeugten Rückhaltekraft wieder in Richtung auf den Dichtsitz in die Schließstellung verschiebbar ist.

Das elastisch verformbare Halteelement hält also den Ventilkörper in der Offenstellung und wirkt somit der Kraft der den Ventilkörper in die Schließstellung verschiebenden Feder entgegen, diese zusätzliche Rückhaltekraft wird aber erst dann wirksam, wenn der Ventilkörper in die Offenstellung verschoben ist. Dadurch wird also die Schließkraft nach erfolgter Öffnung des Schließventils erhöht, man erhält eine Hysterese für den Ventilkörper, die zur Öffnung notwendige Kraft ist höher als die Kraft, die zum Offenhalten des einmal geöffneten Schließventils notwendig ist. Dadurch bleibt der Ventilkörper nach dem Öffnen sicher in der Offenstellung, bis der Druck in der Druckleitung unter einen Wert absinkt, der deutlich unterhalb des Druckwertes liegt, bei dem das Schließventil geöffnet wird. Druckschwankungen in der Druckleitung und der Druckabfall, der durch die Öffnung der Bypassleitung eintritt, führen somit nicht zu einem erneuten Schließen des Schließventils in der Bypassleitung, so daß ein Flattern verhindert wird.

Das Halteelement kann beispielsweise den Ventilkörper durch einen in die Bewegungsbahn des Ventilkörpers eintauchenden, elastisch aus der Bewegungsbahn entfernbaren Bereich mit einer Rückhaltekraft beaufschlagen. Damit wird der Ventilkörper sozusagen im Formschluß gehalten, eine Freigabe des Ventilkörpers erfolgt nur, wenn die in die Bewegungsbahn eintauchenden Bereiche des Halteelementes von dem Ventilkörper seitlich verdrängt werden, und dazu ist eine bestimmte zusätzliche Kraft notwendig.

Bei einer anderen Ausführungsform kann vorgesehen sein, daß das Halteelement den Ventilkörper durch einen im Reibschluß an dem Ventilkörper anliegenden Bereich mit einer Rückhaltekraft beaufschlagt.

Selbstverständlich können die genannten Maßnahmen auch kombiniert eingesetzt werden.

Bei einer bevorzugten Ausführungsform ist vorgesehen, daß das Halteelement ringförmig ausgebildet ist und den Ventilkörper in der Offenstellung seitlich umschließt. Dabei kann je nach Eintauchtiefe des Ventilkörpers in das ringförmige Halteelement dieses allein durch Reibverbindung die Rückhaltekraft erhöhen, oder auch kombiniert mit einem in die Bewegungsbahn eintauchenden Bereich, wenn das ringförmige Halteelement oberhalb des Ventilkörpers wieder elastisch in die Bewegungsbahn des Ventilkörpers eintaucht.

Besonders vorteilhaft ist es, wenn das Halteelement im Querschnitt vierkantig ausgebildet ist.

Das Halteelement besteht vorzugsweise aus einem Polymer auf der Basis von Polyurethan oder Polyester, und es ist günstig, wenn die Weichheit des verwendeten Materials ähnlich dem von Weichdichtungen ist.

Bei einer besonders bevorzugten Ausführungsform ist der Ventilkörper als Kugel ausgebildet.

Gemäß einer bevorzugten Ausführungsform ist die Schließkraft der Feder des Schließventils so gewählt, daß dieses bei voll geöffnetem Auslaß der Druckleitung und entsprechend niedrigem Druck P₀ in der Druckleitung geschlossen ist und bei teilweise geöffnetem Auslaß der Druckleitung und entsprechend erhöhtem Druck P₁ in der Druckleitung geöffnet wird.

Auf diese Weise wird also bei voll geöffneter Druckleitung die Bypassleitung geschlossen gehalten, bei Drosselung des Leitungsquerschnitts in der Druckleitung - und natürlich auch bei vollständigem Verschließen der Druckleitung - wird die Bypassleitung dagegen geöffnet, so daß ein Teilstrom bzw. die gesamte geförderte Flüssigkeitsmenge über die Bypassleitung zur Saugleitung zurückgeführt wird.

Dabei ist es vorteilhaft, wenn der Strömungsweg, der von dem geöffneten Bypassventil freigegeben wird, einen begrenzten Querschnitt aufweist, der bei teilweise geöffnetem Auslaßquerschnitt der Druckleitung zu einer Aufteilung der Strömungswege zwischen Auslaß der Druckleitung und Bypassleitung und damit zur Aufrechterhaltung eines Druckes in der Druckleitung führt, der oberhalb des Druckes P₀ bei vollständig geöffnetem Auslaß der Druckleitung liegt, der aber unter Umständen auch unterhalb dieses Druckes P₀ liegen kann, wenn die zusätzlichen Rückhaltekräfte die von dem Halteelement auf den Ventilkörper ausgeübt werden, groß genug sind. Bei teilweise geöffnetem Auslaßquerschnitt wird somit die Flüssigkeitsmenge definiert reduziert, die durch den Auslaß der Druckleitung abgegeben wird, die andere Teilmenge wird über die Bypassleitung zur Saugleitung zurückgeführt, und bei diesem Vorgang bleibt das Bypassventil trotz der durch die Öffnung des Bypassventils eintretenden Druckabsenkung in der Druckleitung stabil in der Offenstellung, da der Ventilkörper durch die Rückhaltekräfte des Halteelementes erst bei einer noch weiteren Absenkung des Druckes in der Druckleitung wieder schließt.

Der Schutz der Erfindung bezieht sich auch auf ein Schließventil zum Einsetzen in eine Bypassleitung, wie es vorstehend beschrieben ist.

Die nachfolgende Beschreibung dient im Zusammenhang mit der Zeichnung der näheren Erläuterung der Erfindung. Es zeigen:

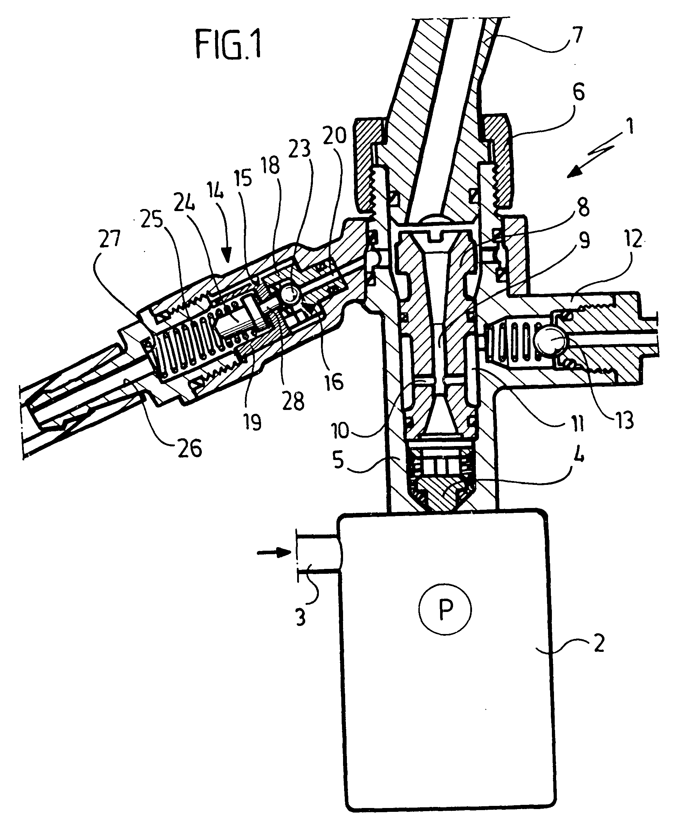

- Figur 1:: eine Ansicht einer Pumpeneinheit mit Druckleitung und abzweigender Bypassleitung im Längsschnitt;

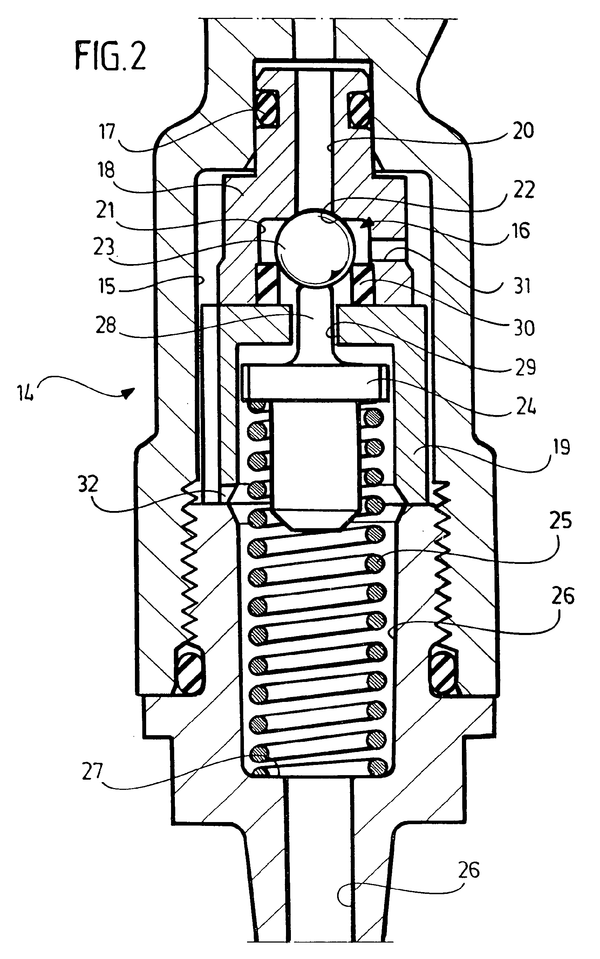

- Figur 2:: eine Längsschnittdarstellung des Schließventils der Bypassleitung in Figur 1 mit dem Ventilkörper in Schließstellung und
- Figur 3:: eine Teilansicht ähnlich Figur 2 mit dem Ventilkörper in Offenstellung.

Die in der Zeichnung dargestellte Pumpeneinheit 1 wird in einem in der Zeichnung nicht gezeigten Hochdruckreinigungsgerät verwendet, in dem über eine Vorratsleitung zugeführte Flüssigkeit, vorzugsweise Wasser, über eine Hochdruckpumpe einer Druckleitung zugeführt wird, die die Flüssigkeit unter hohem Druck über einen Auslaß abgibt, wobei der Auslaß in der üblichen Weise als Spritzpistole oder Spritzlanze mit einem Schließventil ausgebildet ist.

In der Zeichnung ist lediglich die Pumpe 2 der Pumpeinheit 1 schematisch gezeigt, dieser Pumpe wird über eine Saugleitung 3 Flüssigkeit zugeführt, und sie gibt diese Flüssigkeit über ein Auslaßventil 4 in eine Druckleitung 5 ab, die mittels eines Überwurfringes 6 mit einer flexiblen Hochdruckleitung 7 verbunden ist. Über diese Hochdruckleitung 7 wird die Flüssigkeit dem Auslaß zugeführt.

In die Druckleitung 5 ist ein Injektoreinsatz 8 eingesetzt, der eine Verengung 9 des Querschnittes der Druckleitung 5 erzeugt, und im Bereich der Verengung 9 zweigt eine Verbindungsleitung 10 ab, die mit einem von dem Injektoreinsatz 8 gebildeten und beidseitig abgedichteten Ringraum 11 in Verbindung steht. In diesen mündet eine seitlich an die Druckleitung 5 anschließende Chemikalienansaugleitung 12 ein, in der ein federbelastetes Rückschlagventil 13 angeordnet ist, welches durch den Unterdruck geöffnet werden kann, den die durch den Injektoreinsatz 8 strömende Flüssigkeit im Bereich der Verengung 9 erzeugt, so daß auf diese Weise durch die Chemikalienansaugleitung 12 Chemikalie angesaugt und der durch die Druckleitung 5 strömenden Flüssigkeit beigemischt werden kann.

Stromabwärts des Injektoreinsatzes 8 zweigt von der Druckleitung 5 weiterhin eine Bypassleitung 14 ab, die in aus der Zeichnung nicht ersichtlicher Weise mit der Saugleitung 3 der Pumpe 2 verbunden ist, so daß über diese Bypassleitung 14 die von der Pumpe 2 geförderte Flüssigkeit ganz oder teilweise der Saugseite der Pumpe wieder zugeführt werden kann.

In der Bypassleitung 14 ist in einem erweiterten Ventilraum 15 ein Schließventil 16 angeordnet, welches einen in dem Ventilraum 15 über eine O-Ringdichtung 17 abgedichtet aufgenommenen Ventilsitzkörper 18 und einen sich daran anschließenden topfförmigen Führungskörper 19 umfaßt, der am Boden des Ventilraumes 15 anliegt und auf dem sich der Ventilsitzkörper 18 abstützt. Der Ventilsitzkörper 18 weist einen zentralen Strömungskanal 20 auf, der sich stufig in eine durch den Führungskörper 19 verschlossene Ventilkammer 21 öffnet, der stufige Übergang zwischen dem Strömungskanal 20 und der Ventilkammer 21 bildet einen Dichtsitz 22 für einen kugelförmigen Ventilkörper 23 aus, der in der Ventilkammer 21 aufgenommen ist und der in der Ventilkammer 21 so verschoben werden kann, daß er wahlweise in einer Schließstellung am Dichtsitz 22 anliegt und in einer Offenstellung vom Dichtsitz 22 entfernt ist.

In dem Führungskörper 19 ist ein Schließkörper 24 längsverschieblich geführt, an dem sich eine schraubenförmige Schließfeder 25 abstützt, deren anderes Ende in eine zentrale Bohrung 26 im Boden des Ventilraumes 15 eintaucht und sich dort an einer Ringschulter 27 abstützt, die durch eine stufenförmige Verengung der Bohrung 26 gebildet wird.

Der Schließkörper 24 wird im Inneren des Führungskörpers 19 dadurch in Richtung auf den Ventilsitzkörper 18 verschoben und ragt mit einem stiftförmigen Vorsprung 28 durch eine zentrale Öffnung 29 im Führungskörper 19 hindurch, dieser Vorsprung 28 tritt auf diese Weise in die Ventilkammer 21 ein und liegt an dem kugelförmigen Ventilkörper 23 an, der durch den Schließkörper 24 unter der Kraft der Schließfeder 25 gegen den Dichtsitz 22 gedrückt wird.

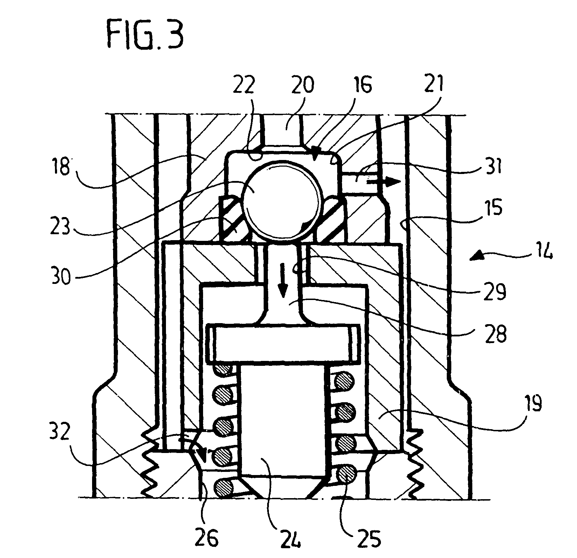

Auf der dem Dichtsitz 22 gegenüberliegenden Seite ist in der Ventilkammer 21 ein ringförmiges Halteelement 30 eingelegt, welches einen rechteckigen Querschnitt aufweist und aus einem weichen Kunststoffmaterial besteht, beispielsweise aus einem Polymer auf Polyurethanbasis oder Polyesterbasis. Der Durchmesser dieses ringförmigen Halteelementes 30 ist so gewählt, daß dieses sich an der Außenseite an der Innenwand der Ventilkammer 21 abstützt, der Innendurchmesser des Halteelementes 30 ist kleiner als der Außendurchmesser des kugelförmigen Ventilkörpers 23. Wenn sich dieser Ventilkörper 23 entgegen der Kraft der Schließfeder 25 in die Offenstellung bewegt, taucht der kugelförmige Ventilkörper 23 dadurch in die Öffnung des ringförmigen Halteelementes 30 ein und verformt dieses Halteelement 30, d.h. der kugelförmige Ventilkörper 23 drängt das Material des Halteelementes 30 radial nach außen, wie dies aus Figur 3 deutlich wird.

Die Ventilkammer 21 steht über eine radiale Bohrung 31 mit dem Ventilraum 15 in Verbindung, und dieser wiederum über eine radiale Bohrung 32 mit der zentralen Bohrung 26 im Boden des Ventilraumes 15. Auf diese Weise ergibt sich ein durchgehender Strömungsweg über den Strömungskanal 20, die Ventilkammer 21, die Bohrung 31, den Ventilraum 15, die Bohrung 32 und die Bohrung 26, dieser Strömungsweg bildet die Bypassleitung aus. Dabei hat dieser Strömungsweg bei geöffnetem Ventilkörper 23 einen begrenzten Querschnitt, so daß dieser beschriebene Strömungsweg eine Drosselwirkung erzeugt und dadurch auch nur eine begrenzte Flüssigkeitsmenge passieren läßt.

Beim normalen Betrieb der beschriebenen Pumpeneinheit 1 wird diese so betrieben, daß der Auslaß an der Druckleitung 5 vollständig geöffnet ist. Dabei stellt sich im Bereich des Schließventils 16 ein relativ niedriger Druck P₀ ein, bei dem das Schließventil 16 unter der Wirkung der Schließfeder 25 geschlossen bleibt.

Wird der Querschnitt des Auslasses der Druckleitung 5 teilweise verschlossen, also reduziert, so führt dies zunächst zu einem Druckanstieg auf einen Druck P₁. Dieser Druckanstieg reicht aus, um den Ventilkörper 23 gegen die Wirkung der Schließfeder 25 in die Offenstellung zu verschieben, dadurch kann ein Teil der von der Pumpe 2 geförderten Flüssigkeit über die Bypassleitung der Saugleitung zugeführt werden, es erfolgt also eine Aufteilung der von der Pumpe 2 ausgehenden Ströme, ein Teilstrom tritt durch den Auslaß der Druckleitung 5 aus, ein anderer Teilstrom gelangt über die Bypassleitung zurück zur Saugleitung.

Durch die Öffnung der Bypassleitung sinkt dabei der Druck in der Druckleitung unter den Wert P₁, der vor der Öffnung des Schließventils 16 in der Druckleitung geherrscht hat, jedoch führt diese weitere Druckabsenkung nicht zu einer Schließung des Schließventiles 16, da der Ventilkörper 23 in das ringförmige Halteelement 30 eingedrückt ist und dort mit einer Rückhaltekraft von dem Halteelement 30 festgehalten wird, im dargestellten Beispiel durch eine Reibkraft zwischen Halteelement 30 und Ventilkörper 23. Man erhält also einen stabilen Zustand mit dauerhaft geöffnetem Schließventil 16. Der sich dabei einstellende Druck kann oberhalb des Druckes P₀ liegen, er kann aber auch unter P₀ absinken, da auch in diesem Falle ein unbeabsichtigtes Schließen der Bypassleitung dadurch verhindert wird, daß das Halteelement 30 den Ventilkörper festhält.

Wird die Druckleitung 5 vollständig verschlossen, so steigt der Druck in der Druckleitung auf einen noch höheren Wert P₂, und dieser Druckanstieg kann über einen in der Zeichnung nicht dargestellten Druckschalter zu einer Abschaltung der Pumpe 2 führen.

Bei einer solchen Pumpenabschaltung wird der dabei anfallende hohe Druck schnell wieder abgebaut, da die Bypassleitung geöffnet ist, der Druckabfall wird aber dadurch begrenzt, daß das Schließventil 16 bei Erreichen eines unteren Grenzdruckes wieder schließt, bei dem die Kraft der Schließfeder 25 ausreicht, um die Rückhaltekraft des Halteelementes 30 zu überwinden.

Beim Wiedereinschalten der Pumpe stellen sich je nach Öffnungszustand des Auslasses der Druckleitung wieder die vorher genannten Druckwerte P₀, P₁ oder P₂ ein, wobei es möglich ist, das Einschalten des Motors dadurch zu erreichen, daß bei vollständiger Öffnung des Auslasses der Druck in der Druckleitung vollständig abgebaut wird. Ein solcher vollständiger Druckabfall kann durch einen weiteren Drucksensor festgestellt und als Einschaltsignal für die Pumpe gewertet werden.

Bei diesen unterschiedlichen Betriebsarten ist es also möglich, allein durch die Wahl des Austrittsquerschnittes am Auslaß der Druckleitung die Flüssigkeitsmenge zu verändern, der über die Druckleitung abgegeben wird, wobei durch das Fangen des Ventilkörpers 23 im Halteelement 30 sichergestellt wird, daß bei geöffnetem Schließventil 16 ein Flattern des Ventilkörpers 23 verhindert wird, ein Schließen des Bypassventils erfolgt bei einem wesentlich niedrigeren Druck in der Druckleitung als das Öffnen, da der Ventilkörper 23 zusätzlich die Rückhaltekraft des Halteelementes 30 überwinden muß, und diese Kraft ist der Kraft der Schließfeder 25 entgegengerichtet und verringert auf diese Weise effektiv die Schließkraft der Schließfeder 25, allerdings nur dann, wenn der Ventilkörper 23 sich in der Offenstellung befindet.

## Patentansprüche

1. Pumpeneinheit (1) für ein Hochdruckreinigungsgerät mit mindestens einer mit einer Saugleitung (3) und mit einer Druckleitung (5) verbundenen Pumpkammer, einer von der Druckleitung (5) zur Saugleitung (3) zurückführenden Bypassleitung (14) und mit einem Schließventil (16) in der Bypassleitung (14), welches einen Ventilkörper (23) unter der Wirkung einer Feder (25) entgegen der Strömungsrichtung in der Bypassleitung (14) gegen einen Dichtsitz (22) in eine Schließstellung drückt, **dadurch gekennzeichnet, daß** dem Dichtsitz (22) gegenüber ein Halteelement (30) aus einem flexiblen und elastisch verformbaren Material angeordnet ist, gegen welches der Ventilkörper (23) beim Abheben vom Dichtsitz (22) in einer Offenstellung derart gedrückt wird, daß der Ventilkörper (23) von dem Halteelement (30) nur durch Verformung des Halteelements (30) entgegen einer von dem Halteelement (30) erzeugten Rückhaltekraft wieder in Richtung auf den Dichtsitz (22) in die Schließstellung verschiebbar ist.

2. Pumpeneinheit nach Anspruch 1, **dadurch gekennzeichnet, daß** das Halteelement (30) den Ventilkörper (23) durch einen in die Bewegungsbahn des Ventilkörpers (23) eintauchenden, elastisch aus der Bewegungsbahn entfernbaren Bereich mit einer Rückhaltekraft beaufschlagt.

3. Pumpeneinheit nach Anspruch 1 oder 2, **dadurch gekennzeichnet, daß** das Halteelement (30) den Ventilkörper (23) durch einen im Reibschluß an dem Ventilkörper (23) anliegenden Bereich mit einer Rückhaltekraft beaufschlagt.

4. Pumpeneinheit nach einem der voranstehenden Ansprüche, **dadurch gekennzeichnet, daß** das Halteelement (30) ringförmig ausgebildet ist und den Ventilkörper (23) in der Offenstellung seitlich umschließt.

5. Pumpeneinheit nach Anspruch 4, **dadurch gekennzeichnet, daß** das Halteelement (30) im Querschnitt vierkantig ausgebildet ist.

6. Pumpeneinheit nach einem der voranstehenden Ansprüche, **dadurch gekennzeichnet, daß** das Halteelement (30) aus Polyurethan besteht.

7. Pumpeneinheit nach einem der Ansprüche 1 bis 5, **dadurch gekennzeichnet, daß** das Halteelement (30) aus Polyester besteht.

8. Pumpeneinheit nach einem der voranstehenden Ansprüche, **dadurch gekennzeichnet, daß** der Ventilkörper (23) eine Kugel ist.

9. Pumpeneinheit nach einem der voranstehenden Ansprüche, **dadurch gekennzeichnet, daß** die Schließkraft der Feder (24) des Schließventils (16) so gewählt ist, daß dieses bei voll geöffnetem Auslaß der Druckleitung (5) und entsprechend niedrigem Druck P₀ in der Druckleitung (5) geschlossen ist und bei teilweise geöffnetem Auslaß der Druckleitung (5) und entsprechend erhöhtem Druck P₁ in der Druckleitung (5) geöffnet wird.

10. Pumpeneinheit nach einem der voranstehenden Ansprüche, **dadurch gekennzeichnet, daß** der Strömungsweg, der von dem geöffneten Schließventil (16) freigegeben wird, einen begrenzten Querschnitt aufweist, der bei teilweise geöffnetem Auslaßquerschnitt der Druckleitung (5) zu einer Aufteilung der Strömungswege zwischen Auslaß der Druckleitung (5) und der Bypassleitung (14) und zur Absenkung des Druckes in der Druckleitung (5) auf einen Wert unterhalb des Öffnungsdruckes P₁ führt.

11. Schließventil zur Verwendung in einer Pumpeneinheit der voranstehenden Ansprüche mit den Merkmalen eines der Ansprüche 1 bis 10.
